# EUROPEAN PATENT SPECIFICATION

(11) **EP 0 655 289 B1**
(45) Date of publication and mention of the grant of the patent: **07.01.1999**
(21) Application number: 94118570.4
(22) Date of filing: 25.11.1994
(51) Int. Cl.: B23B 27/04

(54) **Barrel cutter for writing instrument**
Schneidwerkzeug für Schreibgerät
Outil de coupe pour instrument d'écriture

(30) Priority: 30.11.1993 US 159786
(43) Date of publication of application: 31.05.1995
(73) Proprietor: THE GILLETTE COMPANY, Boston, Massachusetts 02199 (US)
(72) Inventor: Tucker, William E., Attleboro, Massachusetts 02703 (US); Ferrin, Ruben J., Redondo Beach, California 90278 (US); Puente-Gastelum, German C., Saugus, California 91350 (US)
(74) Representative: Baillie, Iain Cameron

(56) References cited:
- DE-A- 2 404 302
- DE-A- 3 910 805
- FR-A- 2 189 156
- US-A- 2 202 591
- US-A- 3 196 518

## Description

### Background of the Invention

The present invention relates to a cutting tool as described in the preamble of claim 1 and as known for example from DE-A-2 404 302. Furthermore it relates to the method of employing the tool in the manufacturing process of cutting a groove in the barrel of a writing instrument.

It has become the practice in the manufacture of writing instruments such as ball point pens and mechanical pencils to employ a rubberized, in the form of a thermoplastic elastomer (T.P.E.), material at the grip portion of the writing instrument to provide the user with a more comfortable and positive feel, when employing the instrument. As it is further necessary to provide a rigid structure to contain the refill or ink container of a pen, or the mechanical mechanism of a pencil, the rubberized, material is generally provided as a laminate or coating material over a more rigid structure formed of plastic material, such as polypropylene.

In addition to the employment of a softer material for the user's grip, it has been found that the formation of a plurality of grooves extending about the periphery of the barrel is effective to provide the user with a feeling of a more firmer grip, making the instrument more acceptable than many instruments in the prior art. In most instances the formation of grooves of this type has been accomplished by employing a saw-type instrument or a knife-shaped tool. However the employment of such devices has a tendency to cause rough edges about the opening of the groove into the barrel and therefore presents a structure which is not pleasing to the eye, and may be unacceptable commercially.

French Patent 2,189,156 discloses a tool for cutting through a workpiece in a single pass and for this purpose presents a cutting tip having two raised cutting edges separated by an elongated channel which extends along the top of the tool.

The present invention is concerned with a tool for cutting a groove in the barrel of a writing instrument having an external surface of rubber-like material which provides for removal of the material from the groove without subsequent fraying of the groove edges.

The tool is intended for cutting a groove of the type mentioned above which is simple in construction and may be easily employed in the manufacture of a writing instrument barrel.

The invention is also concerned with a method of forming a groove in the barrel of a writing instrument having an external surface of rubberized material which is simple to perform and provides a groove having substantially parallel sides without the ragged edges often encountered when applying a blade or saw to the material.

According to the present invention there is provided a tool for cutting a groove in the barrel of a writing instrument having an external surface of foamed or rubber-like plastic material, said tool including a body member having a cutting portion formed thereon, characterized in that the cutting portion has a substantially flat upper surface and a pair of outwardly facing side surfaces extending upwardly from said body member, each surface terminating in a piercing edge defining a piercing plane at its outermost extension, said piercing edges lying in the same plane as said substantially flat upper surface and a recessed surface having a forward cutting edge disposed between said piercing edges spaced from said piercing plane and in the same plane as said piercing edges and substantially flat upper surface.

According to a further aspect of the invention, there is provided A method of forming a groove in the barrel of a writing instrument having an external surface of foamed material characterized by the steps of providing a tool having a substantially flat upper surface and a cutting portion comprising a pair of spaced outwardly facing side surfaces terminating in a piercing plane and a recessed portion defining a cutting edge disposed between said side surfaces and spaced from said piercing plane, said recessed cutting edge and said substantially flat upper surface lying in the same plane, rotating the barrel of the writing instrument and bringing said tool into contact with the surface of the foamed material and forcing the tool cutting portion into the foamed material to form a groove having substantially parallel sides.

The recessed surface is generally planar in form and each of the piercing edges is a maximum height at the piercing plane and decreases in height in a rearward direction along the cutting portion of the tool. The cutting portion recessed surface also generally extends rearwardly and downwardly from the piercing plane and the outwardly facing side surfaces are generally disposed at a maximum lateral spacing at the forward end of the cutting portion and converge at the rear of the cutting portion.

With the barrel comprising an outer layer of rubberized plastic material such as a thermoplastic elastomer and an inner layer of more rigid material such as polypropylene the tool is brought into contact with the inner layer to remove substantially all of the rubberized plastic material under the tool cutting portion.

Reference is now made to the accompanying drawing in which there is shown an illustrative embodiment of the invention from which its novel features and advantages will be apparent, wherein:
Figure 1 is an elevational view showing a writing instrument constructed employing the tool and method of the present invention;
Figure 2 is a sectional view taken along the lines II-II of Figure 1 showing on an enlarged scale details of the grip portion of the writing instrument of Figure 1;
Figure 3 is a fragmentary sectional view taken along the lines III-III of Figure 2 showing further details of the grip portion of the writing instrument of Figures 1 and 2;
Figure 4 is an end view showing a cutting tool employed in forming the grip portion of the writing instrument of Figures 1 through 3 constructed in accordance with the teachings of the present invention;
Figure 5 is a side elevational view showing details of the cutting tool of Figure 4;
Figure 6 is a top plan view showing further details of the cutting tool of Figures 4 and 5;
Figure 7 is an elevational view showing the cutting tool of Figures 4 through 6 as it is about to be employed to cut the grooves in the grip portion of the writing instrument of Figures 1 through 3;
Figure 8 is an elevational view showing the cutting tool of Figures 4 through 6 during the formation of the grooves in the grip portion of the writing instrument of Figures 1 through 3;
Figure 9 is an end view similar to Figure 4 showing an alternative embodiment of a cutting tool employed in forming the grip portion of the writing instrument of Figure 1;
Figure 10 is a top plan view of the cutting tool of Figure 9 showing details of the cutting tool;
Figure 11 is a side elevational view of the cutting tool of Figures 9 and 10; and
Figure 12 is a fragmentary end view showing details of a portion of the structure of Figure 9, taken on an enlarged scale for clarity.

### Description of the Preferred Embodiment

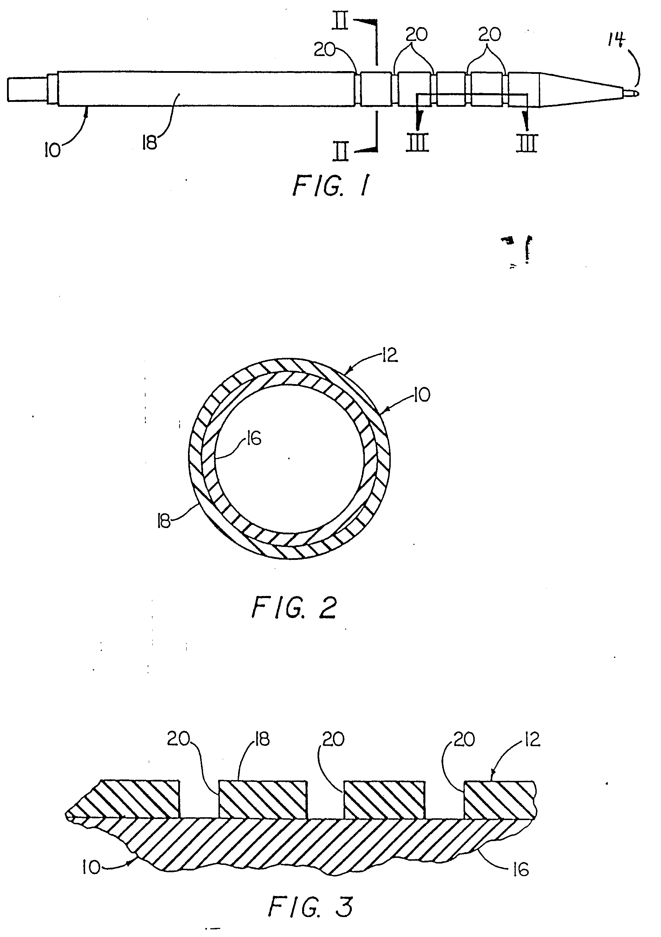

Referring now to the drawing and in particular to Figures 1 through 3 there is shown a writing instrument 10 having a barrel 12 and a writing tip 14. The writing instrument 10 may take the form of a pen or pencil which in either case is designed to be grasped at the portion of the barrel 12 nearest the writing tip 14. As best shown in Figures 2 and 3, the barrel 12 is formed on a laminate comprising a substantially rigid tubular core 16 and an outer coating 18 which may extend over the entire length of the barrel as shown in Figure 1, or may be limited to that portion of the barrel to be gripped by the user. The core 16 may be manufactured of a polypropylene or PVC material while the outer coating 18 is generally formed of a rubber-like plastic material such as a thermoplastic elastomer sold under the trade name Sarlink which is manufactured by DSM Thermoplastic Elastomers, Inc., Leominster, Massachusetts.

It will be noted in Figures 1 and 3 that barrel 12 has a plurality of grooves 20 formed about the periphery of the grip portion of the writing instrument 10, the grooves being formed in the outer coating 18 of the barrel and extending substantially to the core 16, as best shown in Figure 3. To provide an attractive appearance to the writing instrument 10 it is highly desirable that the grooves 20 be defined by substantially parallel facing surfaces and that the outer surface of the coating 18 not be frayed or possess ragged corners produced when the grooves 20 are formed.

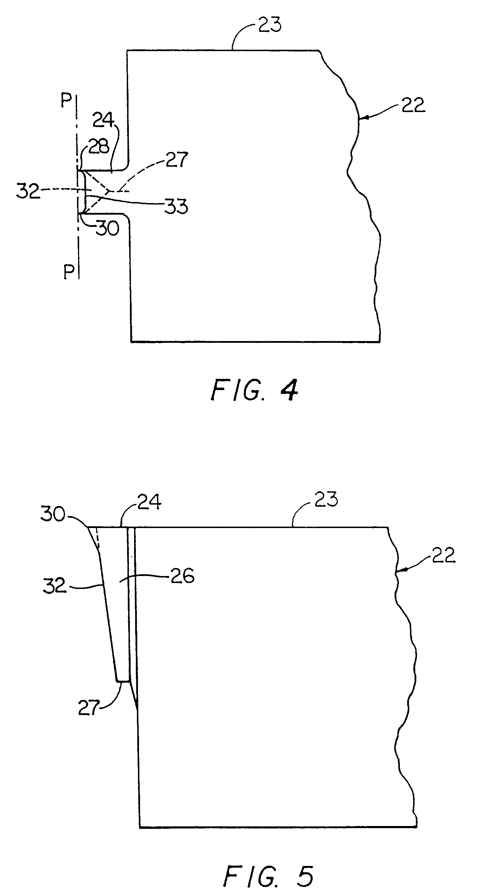

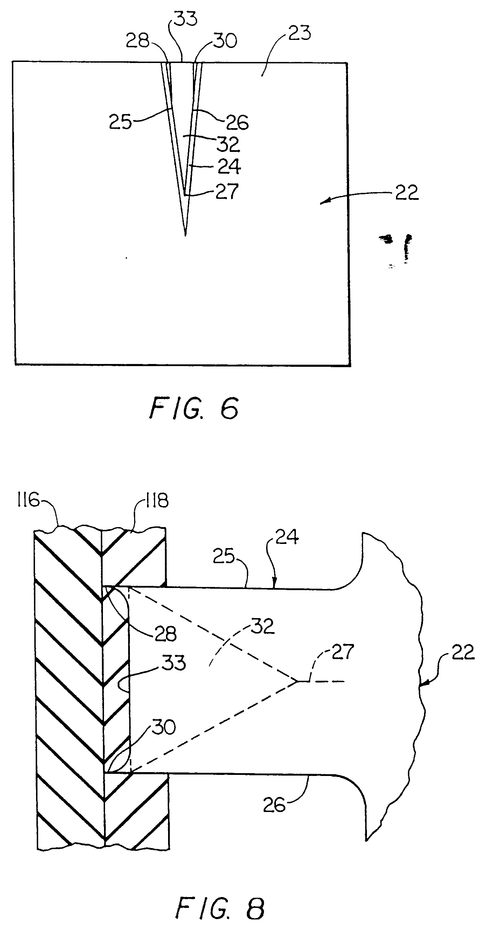

Referring now to Figures 4, 5 and 6 there is shown a cutting tool 22 which is advantageously employed in forming the grooves 20 onto the barrel 12 of the writing instrument 10, as discussed above.

The cutting tool 22 comprises a body member 23 having a cutting portion 24 formed on the upper surface of the member. The cutting portion 24 has a pair of outwardly facing side surfaces 25 and 26 which are widest spaced at the most forward end of the cutting portion 24 and taper rearwardly to join at the vertical edge 27. Each of said side portions 25 and 26 extends upwardly from the body member 23 and terminates in a piercing edge 28 or 30, each of said piercing edges defining a piercing plane P-P at its uppermost extension. A top surface 32 of the cutting portion 24 comprises a cutting edge 33 and is recessed from the piercing plane and extends rearwardly downwardly to the edge 27 formed by the side surfaces 25 and 26. Each of the piercing edges 28 and 30 likewise extends rearwardly downwardly forming an angle with the top surface 32, and terminating in a point at the forwardmost end thereof, at the piercing plane.

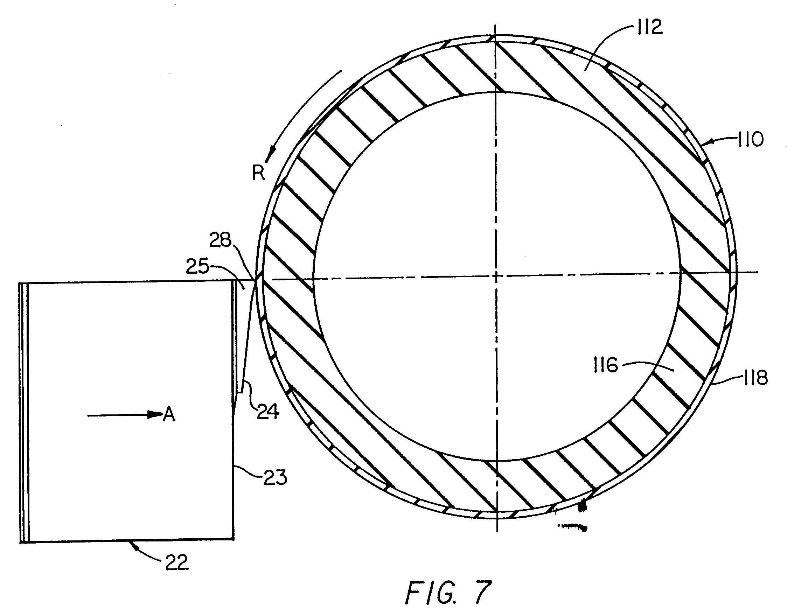

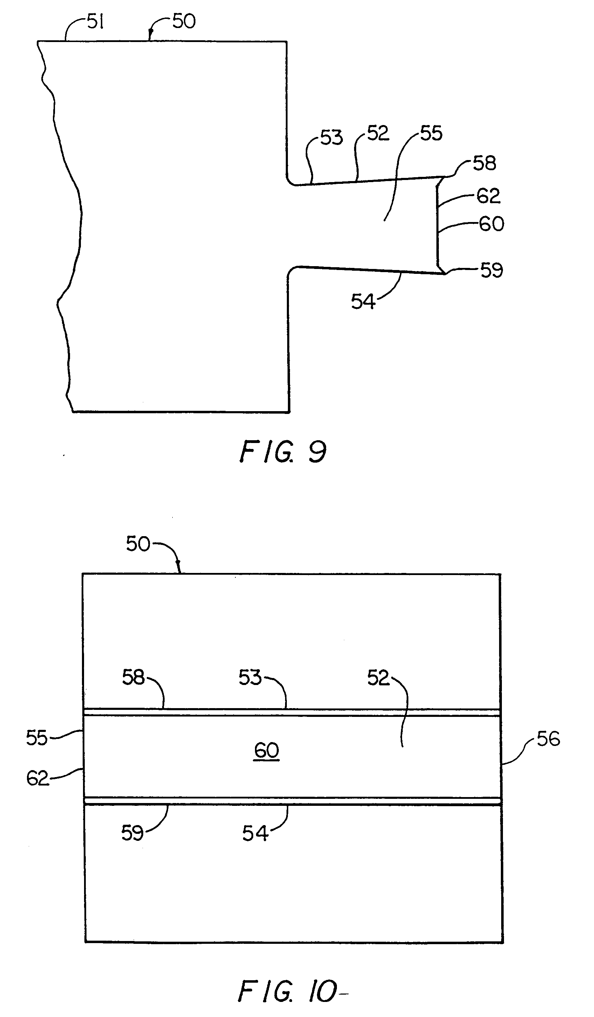

Referring now to Figures 7 and 8 a writing instrument 110 having a barrel 112 has a core 116 and an outer coating 118 onto which a plurality of grooves are to be formed. In processing the grooves onto the barrel 112 the cutting tool 22 is disposed as shown in Figure 7 adjacent the barrel 112 which is rotated in the direction shown by the arrow R. The cutting tool 22 is positioned with the piercing edges 28 and 30 located substantially at the axial center line of the barrel 112 and is moved toward the barrel along the direction of arrow A to contact the outer coating 118 of the barrel.

Referring to Figure 8, as the tool 22 contacts the outer coating 118 the points of the piercing edges 28 and 30 contact the outer coating 118 and serve to pierce the coating to form parallel walls, without removing substantial material from the outer coating. As the tool 22 is moved inwardly towards the core 116 the forward cutting edge 33 of the top surface 32 contacts the material and removes material from between the piercing edges 28 and 30. The tool 22 is moved into the barrel 112 at least until the tool is brought into contact with the outer surface of the core 116 to remove substantially all of the outer coating 118 forming a groove having a depth as desired.

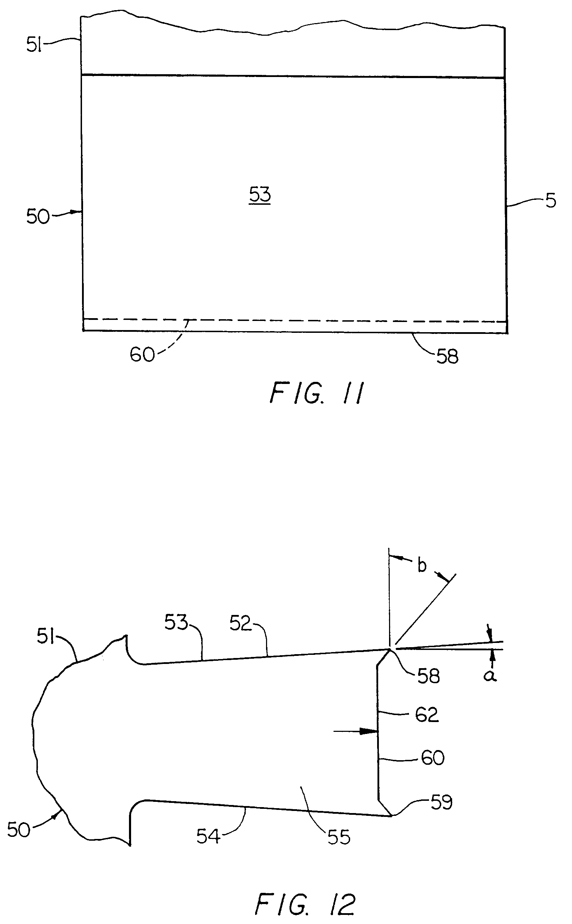

Referring now to Figures 9 through 12 an alternate embodiment of the device in the form of cutting tool 50 is shown to comprise a body member 51 having a cutting portion 52 partially formed by a pair of oppositely facing side surfaces 53 and 54. The side surfaces 53 and 54 are substantially equidistant one from the other, at the front surface 55 of the cutting portion 52 and at the rear surface 56 of the cutting portion. The side surfaces 53 and 54 extend upwardly and terminate in a pair of piercing edges 58 and 59 as best shown in Figures 9 and 12. A top surface 60 terminates in a cutting edge 62 at the front surface 55 of the cutting portion 52.

As best shown in Figure 12 the side surfaces 53 and 54 extend downwardly from the top surface 60 at angle "a" which lies in the area of about three degrees, and each of the piercing edges 58 and 59 are formed by the side surfaces 53 and 54 and an angular surface extending from the respective piercing edge to the top surface 60 at an angle "b" which is in the area of about 45 degrees.

The formation of grooves 20 in a barrel 12 of a writing instrument is accomplished employing the cutting tool 50 in a similar manner to that shown in Figure 7, wherein the cutting tool 50 is moved radially inwardly toward the center of the barrel, forcing first the piercing edges 58 and 59 into the outer coating 18 after which the cutting edge 62 comes into contact with the outer coating and removes the material as the cutting portion 15 of the tool is brought inwardly to the core 16 of the writing instrument.

It will be noted from the above that the piercing edges 28 and 30 of cutting tool 22, and 58 and 59 of cutting tool 50, serve to cleanly sever the walls of the groove, while the leading or cutting edge 33 or 62 of the top surface 32 or 60 removes that material from between the piercing edges, preventing raggedness of the edges such as may be caused by the employment of a saw edge or single edge cutting tool. Thus, the groove achieved by the process has a configuration similar to that shown in Figure 3, which is highly desirable in the finished product.

While it is apparent that changes and modifications can be made within the scope of the present invention, it is our intention, however, only to be limited by the appended claims.

## Claims

1. A tool (22) including a body member (23,51) having a cutting portion (24) formed thereon, characterized in that the cutting portion has a substantially flat upper surface (32,60) and a pair of outwardly facing side surfaces (25,26) extending outwardly from said body member (23,51), each surface terminating in a piercing edge (28,30) defining a piercing plane (P-P) at its outermost extension, said piercing edges (28,30) lying in the same plane as said substantially flat upper surface (32,60) and a recessed surface having a forward cutting edge (33) disposed between said piercing edges (28, 30) spaced from said piercing plane (P-P) and in the same plane as said piercing edges (28,30) and substantially flat upper surface (32,60).

2. A tool according to claim 1, characterized in that said outwardly facing side surfaces (25,26) are disposed inwardly toward said body member (23,51) at an angle of approximately 3 degrees.

3. A tool according to claim 1 or claim 2, characterized in that each said piercing edge (28,30) is a maximum height at said piercing plane (P-P) and decreases in height in a rearward direction.

4. A tool according to claim 3, characterized in that cutting portion recessed surface and said side surfaces (25,26) extend rearwardly, downwardly from said piercing plane (P-P).

5. A tool according to claim 3, characterized in that said outwardly facing side surfaces (25,26) are disposed at a maximum lateral spacing at the forward end of said cutting portion and converge at the rear of said cutting portion.

6. A method of forming a groove in the barrel of a writing instrument having an external surface of foamed material characterized by the steps of providing a tool having the features according to any of the claims 1 to 5, rotating the barrel of the writing instrument and bringing said tool into contact with the surface of the foamed material and forcing the tool cutting portion into the foamed material to form a groove having substantially parallel sides.

7. A method according to claim 6, characterized in that said writing instrument barrel comprises an outer layer of rubber-like material and an inner layer of rigid plastic and in that said tool is brought into contact with said inner layer to remove substantially all of the outer layer material under said tool cutting portion.

## Patentansprüche

1. Werkzeug (22) mit einem Körperelement (23, 52), das ein daran ausgebildetes Schneideteilstück (24) aufweist, dadurch gekennzeichnet, daß das Schneideteilstück eine im wesentlichen flache obere Oberfläche (32, 60) und ein Paar auswärts gerichteter Seitenoberflächen (25, 26) aufweist, die sich von dem genannten Körperelement (23, 51) nach außen erstrecken, wobei jede Oberfläche in einer Stichkante (28, 30) endet, die an ihrer äußersten Stelle eine Stichebene (P-P) definiert, wobei die genannten Stichkanten (28, 30) in der gleichen Ebene liegen wie die genannte im wesentlichen flache obere Oberfläche (32, 60), und wobei eine vertiefte Oberfläche mit einer vorderen Schneidkante (33) zwischen den genannten Stichkanten (28, 30) mit Zwischenabstand zu der genannten Stichebene (P-P) und in der gleichen Ebene wie die genannten Stichkanten (28, 30) und die im wesentlichen flache obere Oberfläche (32, 60) angeordnet ist.

2. Werkzeug nach Anspruch 1, dadurch gekennzeichnet, daß die genannten auswärts gerichteten Seitenoberflächen (25, 26) einwärts in Richtung des genannten Körperelements (23, 51) in einem Winkel von ungefähr 3 Grad angeordnet sind.

3. Werkzeug nach Anspruch 1 oder 2, dadurch gekennzeichnet, daß jede Stichkante (28, 30) eine maximale Höhe auf der genannten Stichebene (P-P) aufweist, und wobei die Höhe in die nach hinten gehende Richtung abnimmt.

4. Werkzeug nach Anspruch 3, dadurch gekennzeichnet, daß sich die vertiefte Oberfläche des Schneideteilstücks und die genannten Seitenoberflächen (25, 26) von der genannten Stichebene (P-P) nach hinten und nach unten erstrecken.

5. Werkzeug nach Anspruch 3, dadurch gekennzeichnet, daß die genannten auswärts gerichteten Seitenoberflächen (25, 26) an dem vorderen Ende des genannten Schneideteilstücks mit einem maximalen lateralen Abstand angeordnet sind und an dem Schneideteilstück nach hinten konvergieren.

6. Verfahren zur Gestaltung einer Rille in dem Schaft eines Schreibgeräts, das eine äußere Oberfläche aus einem Schaumstoff aufweist, wobei das Verfahren durch folgende Schritte gekennzeichnet ist: Bereitstellen eines Werkzeugs mit den Merkmalen gemäß den Ansprüchen 1 bis 5; Drehen des Schafts des Schreibgeräts und Herstellen eines Kontakts zwischen dem genannten Werkzeug und der Oberfläche des Schaumstoffs; und Drücken des Schneideteilstücks des Werkzeugs in den Schaumstoff, so daß eine Rille mit im wesentlichen parallelen Seiten gebildet wird.

7. Verfahren nach Anspruch 6, dadurch gekennzeichnet, daß der genannte Schaft des Schreibgeräts eine äußere Schicht eines gummiartigen Werkstoffs aufweist sowie eine innere Schicht aus hartem Kunststoff, und wobei das genannte Werkzeug in Kontakt mit der genannten inneren Schicht geführt wird, um im wesentlichen den ganzen Werkstoff der äußeren Schicht unter dem genannten Schneideteilstück des Werkzeugs zu entfernen.

## Revendications

1. Outil (22) incluant un élément de corps (23, 51) comportant une partie de coupe (24) formée sur celui-ci, caractérisé en ce que la partie de coupe présente une surface supérieure sensiblement plane (32, 60) et une paire de surfaces latérales en regard vers l'extérieur (25, 26) s'étendant vers l'extérieur à partir dudit élément de corps (23, 51) ; chaque surface se terminant en une arête de perçage (28, 30) définissant un plan de perçage (P-P) à son prolongement le plus à l'extérieur, lesdites arêtes de perçage (28, 30) se trouvant dans le même plan que ladite surface supérieure sensiblement plane (32, 60) et une surface évidée présentant une arête de coupe avant (33) disposée entre lesdites arêtes de perçage (28, 30) espacées dudit plan de perçage (P-P) et dans le même plan que lesdites arêtes de perçage (28, 30) et que la surface supérieure sensiblement plane (32, 60).

2. Outil selon la revendication 1, caractérisé en ce que lesdites surfaces latérales en regard vers l'extérieur (25, 26) sont disposées vers l'intérieur, vers ledit élément de corps (23, 51) à un angle d'approximativement 3 degrés.

3. Outil selon la revendication 1 ou la revendication 2, caractérisé en ce que chaque dite arête de perçage (28, 30) est à une hauteur maximale au niveau dudit plan de perçage (P-P) et diminue de hauteur dans une direction vers l'arrière.

4. Outil selon la revendication 3, caractérisé en ce que la surface évidée de la partie de coupe et lesdites surfaces latérales (25, 26) s'étendent vers l'arrière, vers le bas à partir dudit plan de perçage (P-P).

5. Outil selon la revendication 3, caractérisé en ce que lesdites surfaces latérales en regard vers l'extérieur (25, 26) sont disposées à un espacement latéral maximal au niveau de l'extrémité avant de ladite partie de coupe et convergent à l'arrière de ladite partie de coupe.

6. Procédé de formation d'une rainure dans le corps d'un instrument d'écriture présentant une surface externe constituée d'un matériau alvéolaire, caractérisé par les étapes consistant à procurer un outil ayant les caractéristiques selon l'une quelconque des revendications 1 à 5, faire tourner le corps de l'instrument d'écriture et amener ledit outil en contact avec la surface du matériau alvéolaire et forcer la partie de coupe de l'outil dans le matériau alvéolaire pour former une rainure présentant des côtés sensiblement parallèles.

7. Procédé selon la revendication 6, caractérisé en ce que ledit corps de l'instrument d'écriture comprend une couche extérieure constituée d'un matériau de type caoutchouc et une couche intérieure constituée de matière plastique rigide et en ce que ledit outil est amené en contact avec ladite couche intérieure pour enlever sensiblement la totalité du matériau de la couche extérieure sous ladite partie de coupe de l'outil.
